**Europäisches Patentamt**

**European Patent Office**

**Office européen des brevets**

(19)

(11) Veröffentlichungsnummer: **0 257 600 B1**

(12) # EUROPÄISCHE PATENTSCHRIFT

(45) Veröffentlichungstag der Patentschrift :
**05.06.91 Patentblatt 91/23**

(51) Int. Cl.$^5$: **H05B 41/232**

(21) Anmeldenummer : **87112226.3**

(22) Anmeldetag : **22.08.87**

(54) **Elektronisches Vorschaltgerät.**

(30) Priorität : **26.08.86 DE 3628989**

(43) Veröffentlichungstag der Anmeldung :
**02.03.88 Patentblatt 88/09**

(45) Bekanntmachung des Hinweises auf die
Patenterteilung :
**05.06.91 Patentblatt 91/23**

(84) Benannte Vertragsstaaten :
**DE FR GB NL**

(56) Entgegenhaltungen :
**DE-A- 2 335 726**
**DE-A- 2 454 895**
**DE-A- 2 604 914**

(73) Patentinhaber : **ABB CEAG Licht- und
Stromversorgungstechnik GmbH
Senator-Schwarz-Ring 26
W-4770 Soest (DE)**

(72) Erfinder : **Jütte, Reinhold
Barbarastrasse 32
W-3538 Marsberg 9 (DE)**

(74) Vertreter : **Rupprecht, Klaus, Dipl.-Ing. et al
c/o CEAG Licht- und
Stromversorgungstechnik GmbH ZPT
Postfach 100351
W-6800 Mannheim 1 (DE)**

## Beschreibung

Die Erfindung betrifft ein elektronisches Vorschaltgerät gemäß dem Oberbegriff des Anspruches 1.

Es sind elektronische Vorschaltgeräte bekannt geworden, die am 220-Volt-Netz betrieben werden und Standardleuchtstofflampen versorgen. Diese elektronischen Vorschaltgeräte ersetzten die bekannten konventionellen Vorschaltgeräte, die aus Drossel, Starter und ggf. einem Kompensationskondensator bestehen. Sie sind in der VDE-Vorschrift 0712, Teil 201 näher definiert.

Die Funktion dieser Geräte ist folgendermaßen :

Die Netzspannung durchläuft ein aktives oder passives Oberwellenfilter, wird danach gleichgerichtet und mit einem Kondensator gesiebt. An dieser Gleichspannung wird ein selbstschwingender Halbbrücken-Resonanzkreiswandler mit einer Frequenz größer oder gleich 20 kHz betrieben, der die Leuchtstofflampe versorgt. Die besonderen Vorteile dieser bekannten elektronischen Vorschaltgeräte bestehen darin, daß die Verlustleistung gering ist, wodurch Energie eingespart wird, daß sie weiterhin ein geringes Gewicht haben, daß durch optimiertes Vorheizen der Heizwendeln der einzelnen Leuchtstofflampen ein Sofortstart möglich ist, und daß darüber hinaus Kompensationen nicht erforderlich sind.

Aus physikalischen Gründen und gemäß den geltenden Exvorschriften sind die bekannten elektronischen Vorschaltgeräte nicht ohne weiteres zum Betrieb von Einstiftsockel-Leuchtstofflampen geeignet. Die Geräte müssen zum Einsatz in explosionsgefährdeten Bereichen nämlich in einer bestimmten Zündschutzart, z. B. druckgekapselt oder sandgekapselt ausgeführt sein. Ferner besitzen diese Einstift-Leuchtstofflampen nur einen Einstiftanschluß, weswegen die Elektroden nicht vorgeheizt werden können. Dies liegt daran, daß vorheizbare Elektroden eine Zündquelle für entzündbare Gase wären, die zu Explosionen der umgebenden Atmosphäre beim Bruch des Glaskörpers der Leuchtstofflampe führen könnten. Darüber hinaus wird das sichere Zünden wegen einer fehlenden Vorheizung durch eine höhere Startspannung (Kaltstart) ausgeglichen. Zum sicheren Start aber darf die Startspannung nicht beliebig erhöht werden. Dies ist aus zweierlei Gründen nicht möglich. Zum einen veringern hohe Zündspannungen bei gleichzeitigem Kaltstart die Lampenlebensdauer und gemäß den Ex-Vorschriften sind maximal 660 Volt eff (bisher 500 V eff) zugelassen.

Aufgabe der Erfindung ist es daher, ein elektronisches Vorschaltgerät der eingangs genannten Art zu schaffen, mit dem Einstiftsockel-Leuchtstofflampen in explosionsgeschützten Leuchten problemlos gestartet und betrieben werden können, wobei die Vorschriften für Explosionsschutz eingehalten sind.

Diese Aufgabe wird erfindungsgemäß gelöst durch die kennzeichnenden Merkmale des Anspruches 1. Dabei wird durch das kurzzeitige Leitendwerden eines der steuerbaren Schalter der Schwingkreis, oder auch Resonanzkreis genannt, angestoßen. Die Begrenzungsdrossel hat dabei zwei Steuer- oder Hilfswicklungen, die beim Einsatz der Resonanzkreisschwingungen so geschaltet sind, daß die steuerbaren Schalter abwechselnd leitend werden, weswegen die Schaltung selbständig weiterschwingt. Die Resonanzdrossel dient dann zur Begrenzung des Lampenstromes, nachdem die hohe Resonanzspannung an der Kapazität des Resonanzkreises die Lampe gezündet hat.

Die steuerbaren Schalter sind als Transistoren ausgebildet.

Eine weitere vorteilhafte Ausgestaltung ist den Merkmalen des Anspruches 3 zu entnehmen. Hierdurch wird erreicht, daß der Resonanzschwingkreis auch angestoßen wird.

Eine weitere vorteilhafte Ausgestaltung der Erfindung ist den Ansprüchen 4 bis 6 zu entnehmen, mit denen jeweils eine Lampenstabilisierung erreicht wird.

Weitere vorteilhafte Ausgestaltungen und Verbesserungen sind den weiteren Unteransprüchen zu entnehmen.

Durch die erfindungsgemäße Schaltungsanordnung für das elektronische Vorschaltgerät wird erreicht, daß die Startspannung des Vorschaltgerätes sicher auf 660 Volt begrenzt werden kann. Mit einer relativ hohen Startfrequenz von 50 bis 70 kHz können auch Einstiftsockel-Leuchtstofflampen gezündet werden, die einen Außendurchmesser von 26 mm aufweisen. Die Lichtstromsteuerung läßt dabei einen großen Netzeingangsspannungsbereich zu. Erreicht wird dabei, daß Netzspannungsschwankungen zwischen 198 bis 275 Volt bei Frequenzen von 50 bis 60 Hz keinen Einfluß auf den optimalen Betrieb des Vorschaltgerätes bzw. der Leuchtstofflampe haben. Darüber hinaus wird auch der zulässige Temperaturbereich, in dem das Vorschaltgerät betrieben werden kann, vergrößert. Während in der Vergangenheit mit konventionellen Vorschaltgeräten, die aus Drossel, Starter und ggf. Kompensationskondensator bestehen, maximal minus 10°C untere Betriebstemperatur erreicht werden können, kann das erfindungsgemäße Gerät auch bei minus 20°C bis plus 70°C betrieben werden.

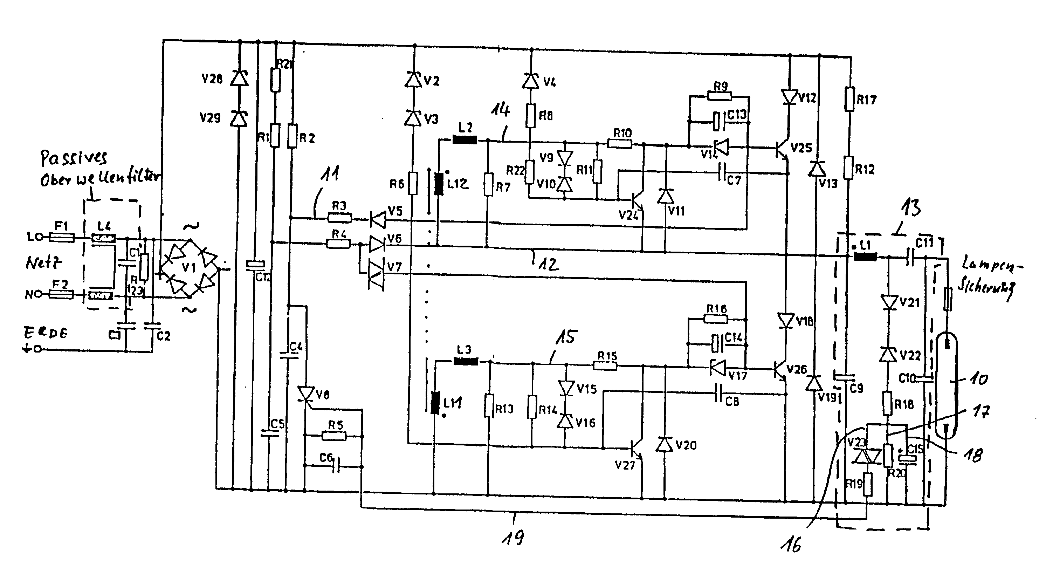

Anhand der Zeichnung, in der ein Ausführungsbeispiel der Erfindung dargestellt ist, soll nun die Erfindung näher erläutert und beschrieben werden.

Es zeigt

Die einzige Figur eine Schaltungsanordnung des erfindungsgemäßen elektronischen Vorschaltgerätes

Mit dem elektronischen Vorschaltgerät wird eine Einstiftsockel-Leuchtstofflampe 10 betrieben.

In der Figur ist links der Netzeingang mit den Netzklemmen L und N dargestellt, an denen jeweils eine Schmelzsicherung F1 und F2 angeschlossen ist, an die ein passives Oberwellenfilter anschließt, daß aus einer Induktivität $L_4$ und einem Kondensator $C_1$ besteht. Parallel zu diesem Kondensator befindet sich ein Widerstand $R_{23}$ und parallel zu dem Widerstand $R_{23}$ eine Gleichrichterschaltung $V_1$, die als Zweiwege-Gleichrichter ausgebildet ist und eine Brückenschaltung von vier Dioden zeigt. Zwischen dem Netzklemme L und Erde (gekennzeichnet durch das übliche Erdungssymbol) hinter dem Widerstand $R_{23}$, und zwischen dem der Netzklemme N und Erde, vor dem Widerstand $R_{23}$, befinden sich je ein Kondensator $C_2$ und $C_3$.

Parallel zu der Gleichrichterschaltung $V_1$ sind zwei Zenerdioden $V_{28}$ und $V_{29}$ in gleicher Richtung in Reihe geschaltet, wobei ihre Kathoden mit dem Pluspol der Gleichrichterschaltung $V_1$ verbunden sind. Hierzu befindet sich parallel ein Elektrolytkondensator $C_{12}$, hierzu wiederum parallel eine Reihenschaltung aus zwei Widerständen $R_{21}$ und $R_1$ und einem Kondensator $C_5$ ; hierzu ist wiederum parallel eine Reihenschaltung aus einem Widerstand $R_2$ und einem Kondensator $R_4$ geschaltet.

Zwischen dem Widerstand $R_1$ und dem Kondensator $C_5$ ist eine Leitung 12 angeschlossen, die einen Begrenzungswiderstand $R_4$ und eine Diode $V_6$ enthält und die mit einem Resonanzschwingkreis 13 verbunden ist. Zwischen dem Begrenzungswiderstand $R_4$ und der Anoder der Diode $V_6$ schließt ein Bein eines als Diac ausgebildeten Schwellwertschalters $V_7$ an, dessen anderes Bein an die Basis eines ersten steuerbaren Schalters $V_{26}$ angeschaltet ist. Zwischen dem Widerstand $R_2$ und dem Kondensator $C_4$ schließt eine Leitung 11 an, in der eine Reihenschaltung eines Widerstandes $R_3$ und einer Diode $V_5$ geschaltet ist, die an der Basis eines zweiten steuerbaren Schalters $V_{25}$ angeschlossen ist. Die Kathode der Diode $V_5$ liegt am Widerstand $R_4$. Hinter der Diode $V_6$, also kathodenseitig schließt ein Leitungszug 14 an, der unter Zwischenfügung eines Widerstandes $R_{10}$ und einer Zenerdiode $V_{14}$ ebenfalls mit deren Anode mit der Basis des zweiten steuerbaren Schalters $V_{25}$ verbunden ist. In dieser Leitung 14 befindet sich eine Hilfswicklung $L_{12}$ einer Begrenzungsdrossel $L_1$ (s. weiter unten) und eine Induktivität $L_2$, die mit der Hilfswicklung $L_{12}$ in Reihe geschaltet ist. Parallel zu der Reihenschaltung der Induktivität $L_2$ und der Hilfswicklung $L_{12}$ befindet sich ein Widerstand $R_7$ und in Reihe mit der Induktivität $L_{12}$ ein Widerstand $R_{10}$. Zwischen dem Anschlußpunkt des Widerstandes $R_7$ an dem Leitungszug 14 und dem Widerstand $R_{10}$ befinden sich eine Diode $V_9$ und eine Zenerdiode $V_{10}$, wobei die Anode der Diode $V_9$ am Leitungszug 14 und deren Kathode mit der Kathode der Zenerdiode $V_{10}$ verbunden sind. Parallel hierzu ist ein Widerstand $R_{11}$ geschaltet, wobei der gemeinsame Anschlußpunkt der Zenerdiode $V_{10}$ und des Widerstandes $R_{11}$ über einen Widerstand $R_{22}$ und einen Widerstand $R_8$ sowie

einer weiteren Zenerdiode $V_4$ mit deren Kathode an den Pluspol der Gleichrichterschaltung $V_1$ angeschlossen ist. Der gemeinsame Anschlußpunkt des Widerstandes $R_{11}$ und der Zenerdiode $V_{10}$ ist an der Basis eines Transistors $V_{24}$ angeschlossen, dessen Kollektor zwischen dem Widerstand $R_{10}$ und der Kathode der Zenerdiode $V_{14}$ an der Leitung 14 angeschlossen ist und dessen Emitter an der Leitung 12 anschließt. Parallel zu der Kollektor-Emitterstrecke des Transistors $V_{24}$ befindet sich eine Diode $V_{11}$ mit deren Kathode am Kollektor. Parallel zu der Zenerdiode $V_{14}$ ist ein Elektrolytkondensator $C_{13}$ und parallel hierzu ein Widerstand $R_9$ geschaltet. Zwischen der Basis des Transistors $V_{24}$ und dem Emitter des steuerbaren Schalters $V_{25}$ befindet sich ein Kondensator $C_7$. Parallel zu der Kollektor-Emitterstrecke befindet sich eine Diode $V_{13}$ und zwischen dem Pluspol der Gleichrichterschaltung $V_1$ und dem Kollektor des steuerbaren Schalters $V_{25}$ ist eine Diode $V_{12}$ geschaltet. Die Kathode der Diode $V_{12}$ schließt am Kollektor des Schalters $V_{25}$ und die der Diode $V_{13}$ an dessen Emitter.

An den Emitter des steuerbaren Schalter $V_{25}$ bzw. an die Leitung 12 schließt die Kathode einer Diode $V_{18}$ und ein zweiter steuerbarer Schalter $V_{26}$ an, dessen Emitter mit dem Minuspol der Gleichrichterschaltung $V_1$ verbunden ist. Die Basis des steuerbaren Schalters $V_{26}$ schließt über einen Leitungszug 15 ebenfalls an den Minuspol des Gleichrichters $V_1$ an, wobei in diesem Leitungszug 15 eine Zenerdiode $V_{17}$ mit ihrer Anode an der Basis des Schalters $V_{26}$, ein Widerstand $R_{15}$, eine weitere Induktivität $L_3$ und eine zweite Hilfswicklung der Begrenzungsdrossel $L_1$ anschließt. Parallel zur Reihenschaltung der Induktivität $L_3$3 und der zweiten Hilfswicklung $L_{11}$ befindet sich ein Widerstand $L_{13}$. An dem gemeinsamen Verbindungspunkt der Induktivität $L_3$ und dem Widerstand $L_{13}$ schließt ein Bein eines Widerstandes $R_{14}$ an, dessen anderes Bein über einen Widerstand $R_6$ und zwei Zenerdioden $V_2$ und $V_3$ mit deren Kathode zum Pluspol des Gleichrichters $V_1$ verbunden sind. Parallel zum Widerstand $R_{14}$, vor dem Widerstand $R_{15}$ ist eine Diode $V_{15}$ und eine Zenerdiode $V_{16}$ deren Kathoden miteinander verbunden sind, angeschlossen ; der gemeinsame Anschlußpunkt des Widerstandes $R_{14}$ und der Kathode der Diode $V_{16}$ ist auf die Basis eines Transistors $V_{27}$ geschaltet ; parallel zu der Kollektor-Emitterstrecke befindet sich eine Diode $V_{20}$, wobei der Kollektor zwischen dem Widerstand $R_{15}$ und der Zenerdiode $V_{17}$ an der Anschlußleitung 16 und der Emitter des Transistors $V_{27}$ an dem Minuspol des Gleichrichters $V_1$ angeschaltet ist. Zwischen der Basis des Transistors $V_{27}$ und dem Emitter des steuerbaren Schalters $V_{26}$ ist ein Kondensator $C_8$ geschaltet. Der Schwellwertschalter bzw. der Diac $V_7$ ist zwischen der Zenerdiode $V_{17}$ und der Basis des steuerbaren Schalters $V_{26}$ geschaltet und parallel zu der Zenerdiode $V_{17}$ befindet sich ein Elektrolytkondensator $C_{14}$ und ein

Widerstand $R_{16}$.

Der Resonanzkreis ist gebildet aus einer Kapazität $C_{10}$, die parallel zur Leuchtstofflampe 10 geschaltet ist, sowie der damit in Reihe liegenden Begrenzungsdrossel $L_1$; parallel zu der Kollektor-Emitterstrecke des steuerbaren Schalters 26 bzw. der Diode $V_{19}$ ist ein Kondensator $C_9$ geschaltet und zwischen der Kapazität $C_{10}$ und der Begrenzungsdrossel $L_1$ befindet sich ein Kondensator $C_{11}$. An der Verbindungsstelle zwischen der Begrenzungsdrossel $L_1$ und dem Kondensator $C_{11}$ schließt eine Reihenschaltung einer Diode $V_{21}$, einer Zenerdiode $V_{17}$ und einem Widerstand $R_{18}$ an, dessen anderes Bein sich aufteilt in drei Leitungszüge 16, 17, 18, von denen der Leitungszug 16 einen Schwellwertschalter $V_{23}$ und einen Widerstand V19, der Leitungszug 17 einen Widerstand $R_{20}$ und der Leitungszug 18 einen Elektrolytkondensator $C_{15}$ aufweisen; -deren andere Beine sind wieder mit der Gleichrichterschaltung $V_1$ zusammengeschaltet. An das freie Bein des Widerstandes $R_{19}$ ist über eine Leitung 19 das Gate eines Thyristors $V_8$ geschaltet; zwischen den Gate und dem Anode befindet sich ein Widerstand $R_5$ und parallel dazu ein Kondensator $C_6$ und die Kathode ist zwischen dem Widerstand $R_2$ und dem Kondensator $C_4$ an den Pluspol der Gleichrichterschaltung angeschaltet.

Die Wirkungsweise der beschriebenen Anordnung ist wie folgt:

An den Netzklemmen L, N liegt Netzspannung an. In dem aus der Induktivität $L_4$ und dem Kondensator $C_1$ gebildeten Oberwellenfilter wird die Netzspannung gefiltert, in der Gleichrichterschaltung $V_1$ gleichgerichtet und durch den Kondensator $C_1$, der als Elektrolytkondensator ausgebildet ist, gesiebt. Auftretende eventuelle Spannungsspitzen werden von den Zenerdioden $V_{28}$, $V_{29}$ abgefangen. Über die Widerstände $R_1$ und R lädt sich der Kondensator $C_5$ auf. Wenn dieser etwa 32 Volt erreicht, schaltet der Diac $V_7$ durch und gibt einen durch den Widerstand $R_4$ begrenzten Stromimpuls auf die Basis des als Transistor ausgebildeten steuerbaren Schalters $V_{26}$, sodaß dieser kurzzeitig leitend wird. Über die Widerstände $R_{17}$ und $R_{12}$ war der Kondensator vorher auf die gleichgerichtete Netzspannung aufgeladen worden. Durch das kurzzeitige Leitendwerden des Transistors $V_{26}$ wird mit Hilfe der Kondensatorladung aus dem Kondensator $C_9$ der Schwingkreis, der aus der Induktivität bzw. der Begrenzungsdrossel $L_1$ und der Kapazität $C_{10}$ gebildet ist, angestoßen.

Die Begrenzungsdrossel $L_1$ besitzt die Steuerwicklungen $L_{11}$ und $L_{12}$, die beim Einsatz der Resonanzkreisschwingungen so geschaltet sind, daß die Transistoren $V_{26}$, $V_{25}$ abwechselnd leitend werden. Dadurch schwingt die Schaltung selbständig weiter und aufgrund der hohen Resonanzspannung an der Kapazität $C_{10}$ wird die Leuchtstofflampe 10 gezündet. Der Lampenstrom wird von der Begrenzungsdrossel $L_1$ begrenzt.

Der Blindstrom aus der Begrenzungsdrossel $L_1$ fließt über die Dioden $V_{13}$, $V_{19}$ an den Kondensator $C_{12}$ zurück. Die Dioden $V_{12}$ und $V_{18}$ verhindern dabei den Inversbetrieb jeweils der Transistoren $V_{25}$ und $V_{26}$. Schwingt der Resonanzkreis, dann werden weitere Ansteuersignale unterdrückt, da der Kondensator $C_5$ über die Diode $V_6$ ständig im Takt der Schwingfrequenz entladen wird.

Im folgenden wird die Wirkungsweise der Ansteuerschaltung des Transistors $V_{26}$ beschrieben; die Ansteuerschaltung des Transistors $V_{25}$ ist die gleiche, sodaß die hier dargestellten Wirkungen auch bei der Ansteuerschaltung des Transistors $V_{26}$ auftreten.

Die von der Begrenzungsdrossel $L_1$ kommende Spannung hat einen Strom durch die Drossel $L_3$, den Widerstand $R_{15}$ und $R_{16}$ in die Basis des Transistors $V_{26}$ zur Folge. Der Spannungsabfall am Widerstand $R_{16}$ lädt den Kondensator $C_{14}$ auf, der mit der Zenerdiode $V_{17}$ auf einen Spannungswert begrenzt wird, der ca. bei 5,6 Volt liegt. Gleichzeitig lädt sich Kondensator $C_8$ über den Widerstand $R_{14}$ auf. Bei Erreichen einer ausreichenden Spannungshöhe (0,7 Volt) wird der Transistor $V_{27}$ leitend und schaltet mit Hilfe der Kondensatorladung des Kondensators $C_{14}$ eine negative Spannung an die Basis des Transistors $V_{26}$, der in den Sperrzustand übergeht, wodurch sich die Spannungsrichtung an der Drossel $L_1$ umkehrt, sodaß die Wicklung der Begrenzungsdrossel eine positive Spannung schaltet, die in der Folge dann den anderen Transistor $V_{25}$ in leitenden Zustand steuert.

Bei erstmaligem Start oder bei fehlender Leuchtstofflampe 10 steht am Kondensator $C_{10}$ (Resonanzkondensator) und damit auch an den Lampenanschlüssen theoretisch eine lediglich durch die Güte des Kreises gedämpfte, sehr hohe Resonanzspannung an. Aus diesem Grund wird der Steuerstrom für die Transistoren $V_{26}$ und $V_{25}$ aus den Hilfswicklungen $L_{11}$ und $L_{12}$ der Resonanzkreisdrossel bzw. Begrenzungsdrossel $L_1$ entnommen, um die Güte des Kreises zu bedämpfen.

Weiterhin wird über die Diode $V_{15}$ und die Diode $V_{16}$ bei Überschreiten eines dadurch gegebenen Grenzwertes der Transistor $V_{27}$ leitend und damit der Transistor $V_{26}$ abgeschaltet. Dadurch wird die Zündspannung für die Leuchtstofflampe sicher auf 660 Volt eff. begrenzt.

Bei fehlender Leuchtstofflampe lädt sich der Kondensator $C_{15}$ über die Diode $V_{21}$, die Diode $V_{22}$ und den Widerstand $R_{18}$ auf. Nach ungefähr drei Sekunden ist eine Spannung von 32 Volt erreicht, sodaß der Diac $V_{32}$ durchbricht und ein Stromimpuls fließt, der mit dem Widerstand $R_{19}$ in das Gate des Thyristors $V_8$ fließt, der dadurch durchgeschaltet wird und über den Widerstand $R_3$ und die Diode $V_5$ den Transistor $V_{25}$ in den Sperrzustand schaltet. Hierdurch wird der Wandler abgeschaltet, wodurch eine unzulässig lange Spannungsbelastung der vom Vorschaltgerät abgehenden Leitungen vermieden wird. Der Haltestrom für

den Thyristor $V_8$ liefert über den Widerstand $R_2$ die gleichgerichtete Netzspannung. Nach kurzzeitigem Unterbrechen der Klemmen L, N und zwar insbesondere kleiner als eine Sekunde, ist das Gerät wieder startbereit.

Beim Betrieb des Gerätes, d. h. mit brennender Leuchtstofflampe 10, wird wie beschrieben, die Spannungszeitfläche der Begrenzungsdrossel $L_1$ an den Steuerwicklungen $L_{11}$ und $L_{12}$ mit Hilfe eines Integrationsgliedes gemessen, das aus den beiden Komponenten, dem Widerstand $R_{14}$ und dem Kondensator $C_8$, zusammengesetzt ist, gemessen. Die Folge ist, daß bei höher werdender Gleichspannung aufgrund höherer Netzspannung in Folge der Transistor $V_{26}$ früher ausgeschaltet wird. Damit wird eine relativ stabile Schwingfrequenz des Wandler erreicht.

Als weitere Maßnahme zur Stabilisierung des Lampen- und damit auch des Lichtstromes dienen die Zenerdioden $V_2$, $V_3$ und der Widerstand $R_6$. Bei Überschreiten der Zenerspannung fließt ein zusätzlicher Strom in den Kondensator $C_8$. Dadurch wird der Transistor $V_{27}$ eher leitend und schaltet den Transistor $V_{26}$ frühzeitiger ab. In der Ansteuerschaltung des Transistors $V_{25}$ übernehmen dies die Diode $V_4$, der Widerstand $R_8$ und der Widerstand $R_{22}$. Damit bleibt bei steigender Eingangsspannung die Schwindfrequenz stabil und auch der Lampenstrom relativ stabil, da der Stromflußwinkel in den Transistoren $V_{25}$ und $V_{26}$ gesteuert wird.

**Ansprüche**

1. Elektronisches Vorschaltgerät für den Betrieb in explosions oder schlagwettergeschützten Leuchten mit mindestens einer TLX-Leuchtstofflampe und mit einer Gleichrichterschaltung, dadurch gekennzeichnet, daß das Vorschaltgerät einen Resonanzkreis aufweist, der aus einer als Begrenzungsdrossel ausgebildeten Induktivität ($L_1$) und einer parallel zur Leuchtstofflampe (10) liegenden Kapazität ($C_{10}$) gebildet ist, der abwechselnd zwei steuerbare Schalter ($V_{25}$, $V_{26}$) ansteuert, so daß nach Anstoßen der Schwingung des Resonanzkreises dieser selbsttätig weiterschwingt, wodurch die an der Kapazität ($C_{10}$) anstehende Resonanzspannung die Lampe zündet.

2. Vorschaltgerät nach Anspruch 1, dadurch gekennzeichnet, daß die Begrenzungsdrossel ($L_1$) zwei Hilfswicklungen ($L_{11}$ und $L_{12}$) aufweist, die im Ansteuerschaltkreis der als Transistorschalter ausgebildeten steuerbaren Schalter ($V_{25}$, $V_{26}$) liegen.

3. Vorschaltgerät nach einem der Ansprüche 1 oder 2, dadurch gekennzeichnet, daß parallel zu dem Ausgang der Gleichrichterschaltung ($V_1$) ein Steuerkondensator ($C_5$) geschaltet ist, dessen eines Bein über einen Schwellwertschalter ($V_7$) mit der Basis eines der steuerbaren Schalter ($V_{26}$) verbunden ist und der nach Aufladen auf den Schwellwert über den Schwellwertschalter den steuerbaren Schalter kurzzeitig ansteuert, und daß parallel zur Kollektor-Emitterstrecke des einen steuerbaren Schalters ($V_{26}$) und zur Gleichrichterschaltung ($V_1$) ein im Resonanzkreis liegender Kondensator ($C_9$) geschaltet ist, sodaß sich beim Einschalten des steuerbaren Schalters ($V_{26}$) der Kondensator ($C_9$) entlädt und den Resonanzkreis anstößt.

4. Vorschaltgerät nach Anspruch 2, dadurch gekennzeichnet, daß im Steuerkreis jedes steuerbaren Schalters ($V_{25}$, $V_{26}$) parallel zu deren Basis-Emitterstrecke die Kollektor-Emitterstrecke jeweils eines weiteren Transistors ($V_{24}$, $V_{27}$) geschaltet ist, die so von den von den Hilfswicklungen der Begrenzungsdrossel ($L_1$) herrührenden Spannungen angesteuert werden, daß sie jeweils den zugehörigen steuerbaren Schalter aus- und den anderen steuerbaren Schalter einschalten und umgekehrt.

5. Vorschaltgerät nach Anspruch 4, dadurch gekennzeichnet, daß in dem Basis-Kollektorkreis jedes weiteren Transistors ($V_{24}$, $V_{27}$) je ein weiterer Schwellwertschalter ($V_9$, $V_{10}$ ; $V_{15}$, $V_{16}$) geschaltet ist, der bei Überschreiten seiner Schwelle den weiteren Transistor ($V_{24}$, $V_{27}$) in leitenden Zustand schaltet und dieser dadurch den zugehörigen steuerbaren Schalter ($V_{25}$, $V_{26}$) in Sperrzustand schaltet.

6. Vorschaltgerät nach Anspruch 5, dadurch gekennzeichnet, daß parallel zur Kapazität ($C_{10}$) ein dritter Kondensator ($C_{15}$) geschaltet ist, der den Resonanzkreis bei ausgebauter oder defekter Leuchtstofflampe (10) aufladt, und daß ein Bein des dritten Kondensators mit dem Gate eines parallel zur Gleichrichterschaltung ($V_1$) geschalteten steuerbaren Halbleiterventils ($V_8$) verbunden ist, dessen Anode mit der Basis eines der steuerbaren Schalter (25) verbunden ist, dergestalt, daß bei Erreichen einer vorgegebenen Ladespannung des dritten Kondensators das Halbleiterventil ($V_8$) und der daran angeschlossene steuerbare Schalter ($V_{25}$) in Sperrzustand geschaltet werden.

7. Vorschaltgerät nach einem der vorigen Ansprüche, dadurch gekennzeichnet, daß jede Ansteuerschaltung ein Integrationsglied ($R_{14}$, $C_8$) aufweist, das die Spannungszeitfläche der Begrenzungsdrossel an deren Hilfswicklungen mißt und bei Erreichen eines vorbestimmten Spannungs-Zeitflächen-Integralwertes den zugehörigen steuerbaren Schalter abschaltet.

8. Vorschaltgerät nach einem der vorigen Ansprüche, dadurch gekennzeichnet, daß die Basis der Transistoren ($V_{24}$, $V_{27}$) mit dem Pluspol der Gleichrichterschaltung ($V1$) unter Zwischenfügung von Zenerdioden ($V_2$, $V_3$ ; $V_4$) verbunden ist und daß zwischen der Basis der Transistoren ($V_{24}$, $V_{27}$) und den Emittern der zugehörigen steuerbaren Schalter ($V_{25}$, $V_{26}$) ein vierter Kondensator ($C_7$, $C_8$) geschaltet ist, sodaß der Lampen- und Lichtstrom weiter stabilisiert wird.

## Claims

1. Electronic ballast for operation in explosion-proof or flameproof luminaires having at least one TLX fluorescent lamp and having a rectifier circuit, characterised in that the ballast has a resonant circuit which is formed from an inductor ($L_1$) constructed as a limiting reactor, and a capacitor ($C_{10}$), which is located in parallel with the fluorescent lamp (10) and alternately triggers two controllable switches ($V_{25}$, $V_{26}$), so that after triggering of the oscillation of the resonant circuit the latter continues to oscillate independently, as a result of which the resonance voltage present at the capacitor ($C_{10}$) starts the lamp.

2. Ballast according to Claim 1, characterised in that the limiting reactor ($L_1$) has two auxiliary windings ($L_{11}$ and $L_{12}$), which are located in the trigger circuit of the controllable switches ($V_{25}$, $V_{26}$) constructed as transistor switches.

3. Ballast according to one of Claims 1 or 2, characterised in that there is connected in parallel to the output of the rectifier circuit ($V_1$) a control capacitor ($C_5$), one leg of which is connected via a trigger ($V_7$) to the base of one of the controllable switches ($V_{26}$), and which after charging to the threshold value triggers the controllable switch for a short time via the trigger, and in that a capacitor ($C_9$) located in the resonant circuit is connected in parallel to the collector-emitter section of one controllable switch ($V_{26}$) and to the rectifier circuit ($V_1$), so that upon closing of the controllable switch ($V_{26}$) the capacitor ($C_9$) is discharged and triggers the resonance circuit.

4. Ballast according to Claim 2, characterised in that there is connected in the control circuit of each controllable switch ($V_{25}$, $V_{26}$) in parallel to the base-emitter section thereof the collector-emitter section of in each case one further transistor ($V_{24}$, $V_{27}$), which are triggered by the voltages generated by the auxiliary windings of the limiting reactor ($L_1$) in such a way that in each case they open the associated controllable switch and close the other controllable switch, and vice versa.

5. Ballast according to Claim 4, characterised in that there is connected in the base-collector circuit of each further transistor ($V_{24}$, $V_{27}$) one further trigger ($V_9$, $V_{10}$ ; $V_{15}$, $V_{16}$) each, which upon overshooting its threshold switches the further transistor ($V_{24}$, $V_{27}$) into the conductive state, and the latter thereby switches the associated controllable switch ($V_{25}$, $V_{26}$) into the blocking state.

6. Ballast according to Claim 5, characterised in that there is connected in parallel to the capacitor ($C_{10}$) a third capacitor ($C_{15}$), which charges the resonant circuit when the fluorescent lamp (10) is removed or defective, and in that one leg of the third capacitor is connected to the gate of a controllable semiconductor valve ($V_8$), which is connected in parallel to the rectifier circuit ($V_1$) and whose anode is connected to the base of one of the controllable switches (25), in such a way that when a prescribed charging voltage of the third capacitor is reached the semiconductor valve ($V_8$) and the controllable switch ($V_{25}$) connected thereto are switched into the blocking state.

7. Ballast according to one of the preceding claims, characterised in that each trigger circuit has an integrating element ($R_{14}$, $C_8$), which measures the voltage-time area of the limiting reactor at the auxiliary windings thereof, and opens the associated controllable switch when a prescribed voltage-time area integrated measurand has been reached.

8. Ballast according to one of the preceding claims, characterised in that the base of the transistors ($V_{24}$, $V_{27}$) is connected to the positive pole of the rectifier circuit (V1) (sic) in conjunction with the interposition of zener diodes ($V_2$, $V_3$ ; $V_4$), and in that a fourth capacitor ($C_7$, $C_8$) is connected between the base of the transistors ($V_{24}$, $V_{27}$) and the emitters of the associated controllable switches ($V_{25}$, $V_{26}$) so that the lamp and lighting current is further stabilised.

## Revendications

1. Ballast électronique pour l'utilisation dans des appareils d'éclairage anti-déflagrants ou protégés contre les explosions, comportant au moins un tube fluorescent TLX et un circuit redresseur, caractérisé en ce que le ballast comporte un circuit de résonance, qui est constitué d'une inductance ($L_1$) réalisée sous forme de bobine de limitation et d'une capacité ($C_{10}$) montée en parallèle avec la lampe fluorescente (10), et qui commande alternativement deux commutateurs commandés ($V_{25}$ et $V_{26}$) de telle sorte que le circuit de résonance continue à osciller de manière autonome après le déclenchement de l'oscillation, la tension de résonance disponible aux bornes de la capacité ($C_{10}$) allumant la lampe.

2. Ballast selon la revendication 1 caractérisé en ce que la bobine de limitation ($L_1$) comporte deux enroulements auxiliaires ($L_{11}$ et $L_{12}$) qui sont situés dans le circuit de commande des commutateurs ($V_{25}$, $V_{26}$) se présentant sous la forme de commutateurs à transistor.

3. Ballast selon l'une des revendications 1 ou 2 caractérisé en ce qu'il est branché, en parallèle avec la sortie du circuit redresseur ($V_1$), un condensateur de commande ($C_5$), dont l'une des pattes est reliée, par l'intermédiaire d'un commutateur à seuil ($V_7$), à la base d'un commutateur commandé ($V_{26}$) et qui, après chargement à la valeur de seuil, commande pendant un bref instant, par l'intermédiaire dudit commutateur à seuil, ledit commutateur commandé, et en ce qu'un condensateur ($C_9$) monté dans le circuit de résonance est branché en parallèle avec le circuit collecteur-émetteur de l'un des commutateurs commandés ($V_{26}$) ainsi qu'avec le circuit redresseur ($V_1$), de manière

telle que le condensateur ($C_9$) se décharge lors de la fermeture dudit commutateur commandé ($V_{26}$) et déclenche le circuit de résonance.

4. Ballast selon la revendication 2 caractérisé en ce que, dans le circuit de commande de chacun des commutateurs commandés ($V_{25}$, $V_{26}$), est monté, en parallèle avec le circuit base-émetteur desdits commutateurs commandés, le circuit collecteur-émetteur de transistors supplémentaires ($V_{24}$, $V_{27}$) qui sont commandés par les tensions délivrées par les enroulements auxiliaires de la bobine de limitation ($L_1$) de manière telle qu'ils ferment chaque fois le commutateur commandé concerné et ouvrent l'autre commutateur, et vice-versa.

5. Ballast selon la revendication 4 caractérisé en ce que, dans le circuit base-collecteur de chaque transistor supplémentaire ($V_{24}$, $V_{27}$) est monté chaque fois un commutateur à seuil supplémentaire ($V_9$, $V_{10}$. $V_{15}$, $V_{16}$) qui, lorsque son seuil est dépassé, commute le transistor supplémentaire ($V_{24}$, $V_{27}$) dans l'état conducteur, lequel transistor commute à son tour le commutateur commandé ($V_{25}$, $V_{26}$) dans l'état bloqué.

6. Ballast selon la revendication 5 caractérisé en ce qu'un troisième condensateur ($C_{15}$) est branché en parallèle avec la capacité ($C_{10}$) et charge le circuit de résonance, lorsque la lampe fluorescente (10) est débranchée ou est défectueuse, et en ce qu'une patte dudit troisième condensateur est reliée à la gachette d'une soupape à semi-conducteur ($V_8$) commandée, montée en parallèle avec le circuit redresseur ($V_1$), dont l'anode est reliée à la base d'un commutateur ($V_{25}$) commandé, de manière telle que, lorsque la tension de charge prédéterminée dudit troisième condensateur est atteinte, la soupape à semi-conducteur ($V_8$) et le commutateur commandé ($V_{25}$) qui lui est connecté sont amenés à l'état bloqué.

7. Ballast selon l'une des revendications précédentes caractérisé en ce que chaque circuit de commande comporte un élément intégrateur ($R_{14}$, $C_8$) qui mesure la surface tension-temps de la bobine de limitation au niveau de ses enroulements auxiliaires, et ouvre le commutateur commandé correspondant lorsqu'une valeur d'intégration de surface tension-temps prédéterminée est atteinte.

8. Ballast selon l'une des revendications précédentes caractérisé en ce que la base des transistors ($V_{24}$, $V_{27}$) est reliée au pôle positif du circuit redresseur ($V_1$) par l'intermédiaire de diodes Zener ($V_2$, $V_3$, $V_4$) et en ce qu'un quatrième condensateur ($C_7$, $C_8$) est branché entre la base des transistors ($V_{24}$, $V_{27}$) et les émetteurs des commutateurs commandés ($V_{25}$, $V_{26}$) correspondants, de manière à améliorer la stabilité du courant de lampe et du courant d'éclairage.